# EUROPEAN PATENT SPECIFICATION

(11) **EP 4 520 232 B1**
(45) Date of publication and mention of the grant of the patent: **10.09.2025**
(21) Application number: 24191918.2
(22) Date of filing: 30.07.2024
(51) Int. Cl.: A47K 11/02

(54) **PLASTIC BAG PULL-DOWN DEVICE FOR SMART PACKAGING TOILET AND SMART TOILET WITH THE DEVICE**
KUNSTSTOFFBEUTELTRANSPORTVORRICHTUNG FÜR INTELLIGENTE VERPACKUNGSTOILETTE UND INTELLIGENTE TOILETTE MIT DER VORRICHTUNG
DISPOSITIF DE TRANSPORT DE SAC EN PLASTIQUE POUR TOILETTES À EMBALLAGE INTELLIGENTES ET TOILETTES INTELLIGENTES AVEC LE DISPOSITIF

(30) Priority: 11.09.2023 CN 202311161934
(43) Date of publication of application: 12.03.2025
(73) Proprietor: Jiangsu Sanjo Intelligent Technology Co., Ltd., Nandu Town Liyang City, Jiangsu 213371 (CN); Photon Robot (Ningbo) Co., Ltd., Ningbo Zhejiang 315000 (CN)
(72) Inventor: WANG, Lei, Ningbo 315000 (CN); ZHANG, Jiang, Ningbo 315000 (CN); XIAO, Heping, Liyang City, Changzhou 213371 (CN)
(74) Representative: Miller, Ronald Anthony

(56) References cited:
- CN-A- 110 063 682
- US-A1- 2006 283 153
- US-A1- 2009 255 045

## Description

### TECHNICAL FIELD

The present disclosure relates to the technical field of smart toilets, and in particular to a plastic bag pull-down device for a smart packaging toilet and a smart toilet.

### BACKGROUND

Toilets are indispensable bathroom products in households. With the development of science and technology, toilets tend to be smart and diversified in functions, such as constant temperature, flushing, and automatic packaging. These toilets greatly improve the user experience.

At present, there are generally two types of toilets on the market: flush toilets and waterless toilets. The flush toilets are not as good as waterless toilets in portability and operability. Generally, waterless toilets use bagging and packaging to treat excreta. Manual bagging and packaging have problems of complicated operation and insanitation, and therefore an automatic plastic bag replacement method is mostly adopted. Suction bagging and roller pull-down are two common ways to replace a plastic bag in smart toilets. The suction bagging makes a negative pressure formed between a plastic bag and a toilet body through exhausting by a fan, and the plastic bag is introduced into a trash can by means of atmospheric pressure. However, due to a slightly complicated structure in the toilet body, the introduction and laying of the plastic bag require a greater pressure, a pull-down effect is not ideal, and various parts of the plastic bag are susceptible to pollution. Another method is to use a motor for driving, and gear transmission mechanisms on two sides are synchronized by a connecting rod to drive rollers to rotate. Since there is a squeezing force between the rollers, a plastic bag can be driven to be pulled down and replaced by friction. Since a connecting rod transmission can only be placed in front or at the back, such a device has a long transmission path, and friction between gears consumes a lot of energy. Moreover, the reliability is poor due to a gear manufacturing error. CN110063682A discloses a waterless toilet with separated defecation and urination, comprising a toilet body, a jet positioning device, a bag moving device and a cutting and sealing device. There are two bag moving devices, which are respectively located under the stool funnel and the urine funnel. Each bag moving device has one roller assembly for pulling the bags down. US2006/283153A1 discloses a packaging device and trash box, wherein the device automatically and continuously packs women's sanitary products, paper diapers, and the like in a sealed manner and is installed in toilets of hotels, public toilets, and the like used by general public. When a trash is put in, film pull-out rollers are rotated by a motor and films are pulled out from film feed rollers. When passing between film pull-out rollers, the trash is sealingly packed between the two films. Between at least one-side ends of the film pull-out rollers, a spring (not shown) as an elastic member is hung to bias the both in approaching directions in the normal state. US2009/255045A1 discloses a pulldown device with two independent pull-down roller assemblies at each side of the same funnel to act on the same bag. The packaging mechanism includes a shallow box-shaped casing, which is provided with two pairs of feed rolls (although only one of the two pairs is shown in the drawings) arranged at the opposite lateral sides of the aperture in order to nip the bag drawn downward through the aperture. The two pairs of feed rolls and the actuator arms are driven by respective motors that are different from each other (not shown).

### SUMMARY

In order to solve the problem of poor effects of an existing plastic bag pull-down device for a smart packaging toilet, the present disclosure discloses a plastic bag pull-down device for a smart packaging toilet and a smart packaging toilet. The technical solutions of the present disclosure are implemented as follows.

A plastic bag pull-down device for a smart packaging toilet includes two roller driving assemblies arranged oppositely for pulling a plastic bag down, where
each roller driving assembly includes a motor, a motor shaft, a housing, a first gear, a second gear, a first roller, and a second roller, the motor is mounted on an outer surface of the housing and is connected to the first gear through the motor shaft, the first gear is connected to the first roller and meshes with the second gear, and the second gear is rotatably mounted on a transmission shaft inside the housing and is connected to the second roller.

Each roller driving assembly further includes a torsion spring and a limiting platform, where
the torsion spring is sleeved on a fixed column in the housing, one end of the torsion spring is limited to an inner wall of the housing, the other end of the torsion spring abuts against the limiting platform, and a circular hole in an edge of the limiting platform is connected to the transmission shaft, wherein a positioning hole of the transmission shaft on the housing is provided as a slot hole.

Preferably, each of the first roller and the second roller is wrapped with a rubber skin.

A plastic bag pull-down device for a smart packaging toilet includes a base, a toilet seat, a plastic bag pull-down device, where two roller driving assemblies are mounted on two sides of a bottom of the toilet seat respectively.

Each motor is a direct-current deceleration motor.

According to this patent, the two direct-current deceleration motors are used to drive rubber rollers on two sides respectively, the two motors can rotate synchronously through model selection and a reasonable control strategy, and a single pair of gears is adopted on each side to implement rotation of the two rollers in opposite directions. This solves the problem that an existing smart packaging toilet has a poor plastic bag pull-down and replacement effect, such that the device is simpler, lower in cost and higher in space utilization rate and has a better implementation effect.

### BRIEF DESCRIPTION OF THE DRAWINGS

To describe the technical solutions in the embodiments of the present disclosure or in the prior art more clearly, the following briefly describes the accompanying drawings required for describing the embodiments or the prior art. Clearly, the accompanying drawings in the following description merely show an embodiment of the present disclosure, and those of ordinary skill in the art can still derive other drawings from these accompanying drawings without creative efforts.

The same parts are denoted by the same reference signs. It should be noted that the words "front", "rear", "left", "right", "upper", and "lower" used in the following description refer to directions in the accompanying drawings, and the words "bottom surface", "top surface", "inner", and "outer" refer to directions toward or away from a geometric center of a specific part respectively.
FIG. 1 is a schematic structural diagram of a smart packaging toilet according to an embodiment;
FIG. 2 is a schematic structural diagram of a roller driving assembly according to an embodiment;
FIG. 3 is a schematic structural diagram of a roller driving assembly (without gears and rollers) according to an embodiment; and
FIG. 4 is a schematic structural diagram of a back portion of a roller driving assembly according to an embodiment.

Reference signs:
1. Base;
2. Roller driving assembly;
2-1. Motor; 2-2. Motor shaft; 2-3. Housing; 2-4. First gear; 2-5. Second gear; 2-6. First roller; 2-7. Second roller; 2-8. Transmission shaft; 2-9. Torsion spring; 2-10. Limiting platform;
3. Toilet seat.

### DETAILED DESCRIPTION OF THE EMBODIMENTS

The technical solutions of the embodiments of the present disclosure are clearly and completely described below with reference to the accompanying drawings in the embodiments of the present disclosure. Apparently, the described embodiments are merely some rather than all of the embodiments of the present disclosure. All other embodiments obtained by those of ordinary skill in the art based on the embodiments of the present disclosure without creative efforts shall fall within the protection scope of the present disclosure.

### Embodiment

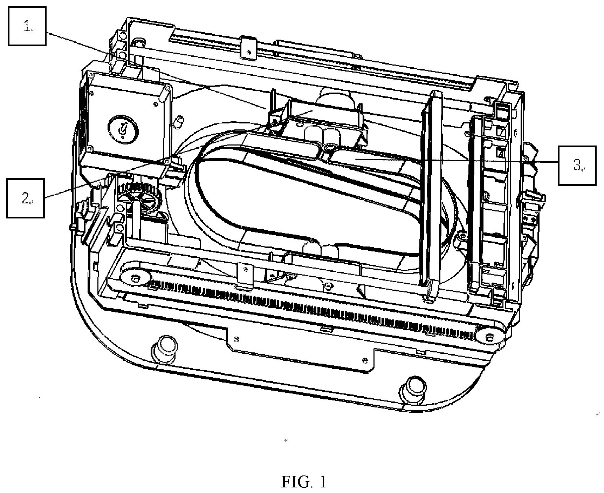

In a specific embodiment, as shown in FIG. 1, an smart packaging toilet includes base 1, toilet seat 3, and a plastic bag pull-down device. The plastic bag pull-down device includes two roller driving assemblies 2. The plastic bag pull-down device is mounted on the base 1, and the middle of the base 1 is provided with a circular through hole for a plastic bag to pass through. The two roller driving assemblies 2 in the plastic bag pull-down device are mounted on two sides of the circular through hole and are fixed to the base 1 by screws.

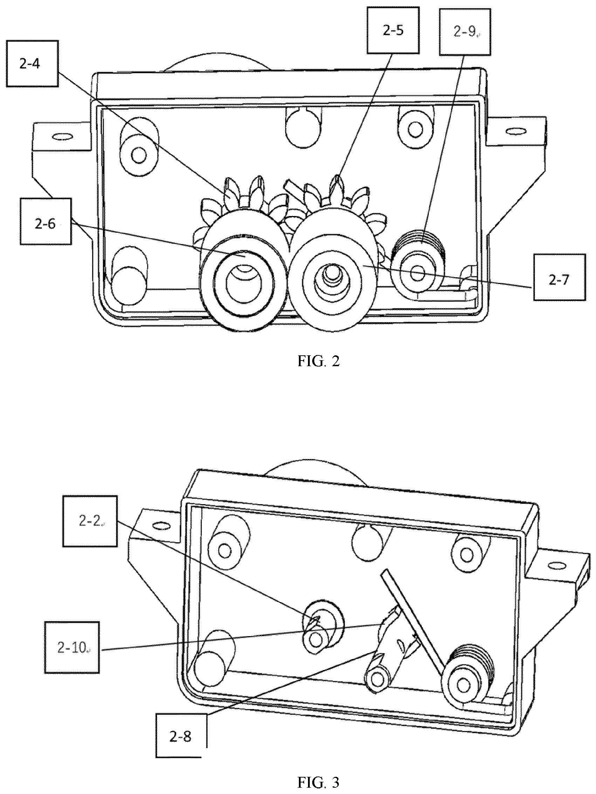

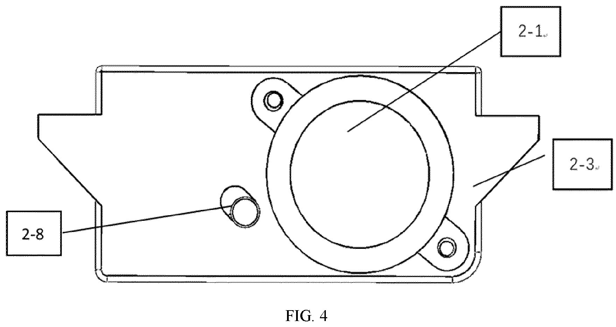

As shown in FIGS. 2 to 4, the roller driving assembly 2 includes motor 2-1, motor shaft 2-2, housing 2-3, first gear 2-4, second gear 2-5, first roller 2-6, and second roller 2-7. The motor 2-1 is mounted on an outer surface of the housing 2-3 and is connected to the first gear 2-4 through the motor shaft 2-2. The first gear 2-4 is connected to the first roller 2-6 and meshes with the second gear 2-5, and the second gear 2-5 is rotatably mounted on transmission shaft 2-8 inside the housing 2-3 and is connected to the second roller 2-7. The roller driving assembly 2 further includes torsion spring 2-9 and limiting platform 2-10. The torsion spring 2-9 is sleeved on a fixed column in the housing 2-3, one end of the torsion spring 2-9 is limited to an inner wall of the housing 2-3, the other end of the torsion spring 2-9 presses the limiting platform 2-10, and the limiting platform 2-10 is connected to the transmission shaft 2-8. Each of the first roller 2-6 and the second roller 2-7 is wrapped with a rubber skin. Each motor 2-1 is direct-current deceleration motor 2-1. The two roller driving assemblies 2 are mounted on two sides of a bottom of the toilet seat 3 respectively.

In this embodiment, the roller driving assemblies 2 on two sides are respectively driven by the motors 2-1, and each motor 2-1 drives the first gear 2-4 and the second gear 2-5 in the housing 2-3 to rotate, and then drives the first roller 2-6 and the second roller 2-7 to rotate, thereby driving a plastic bag to be pulled down and rotate. Middle parts of the first roller 2-6 and the second roller 2-7 are mounted corresponding to an inner ring of the toilet, so as to pull down and replace the plastic bag.

The first gear 2-4 is fixed to the motor shaft 2-2, and is connected to the first roller 2-6 in a D-shaped key connection mode. The second gear 2-5 and the second roller 2-7 are connected to the transmission shaft 2-8. Each of the first roller 2-6 and the second roller 2-7 is coated with a rubber skin to increase friction and provide certain deformation capacity. The second gear 2-5 is connected to the transmission shaft 2-8 is a pin connection mode, and the second gear 2-5 is fixed in a pin hole in the transmission shaft 2-8. The second roller 2-7 is connected to the transmission shaft 2-8 in a D-shaped key connection mode. The first gear 2-4 and the second gear 2-5 are in meshing transmission in the housing 2-3, and the first gear 2-4 drives the second gear 2-5 to drive the first roller 2-6 and the second roller 2-7 to rotate. The transmission shaft 2-8 is fixed in a slot hole of the housing 2-3, and the transmission shaft 2-8 is axially positioned by the limiting platform 2-10 and the torsion spring 2-9. The motor 2-1 is fixed into a hole of the housing 2-3 by a bolt. During operation of the plastic bag pull-down device, the two rollers need certain friction and squeezing to enable the plastic bag to be pulled down and replaced normally. However, if two shafts of the rollers are completely fixed, after use for a certain period of time, the rollers may be loosened due to wear and aging of rubber, resulting in the failure of a pull-down mechanism and the failure to operate normally. Moreover, after mounting, the positions of the two rubber rollers are attached and inseparable, so that it is very difficult to pull the plastic bag to between the rollers. Therefore, when the transmission shaft 2-8 is provided, a positioning hole of the transmission shaft 2-8 on the housing 2-3 is provided as a slot hole, so the transmission shaft 2-8 has a part of movable space, and the transmission shaft 2-8 can slide in a slot to a certain extent. In addition, the torsion spring 2-9 is arranged to press the transmission shaft 2-8, so that there is a certain pre-tightening force between the two rollers without loosening. When the plastic bag needs to be manually pressed to between the rollers for the first packaging, the movable shafts may be separated when squeezed by an external force, so that the two rollers are separated, which facilitates mounting.

During practical operation, when a plastic bag is filled for the first time, a user needs to manually place the plastic bag to between the two rollers on two sides, and the plastic bag is pulled down by means of a squeezing force and friction between the rollers. Since the transmission shaft 2-8 for two second rollers 2-7 is fixed by the torsion spring 2-9, and the two rollers can be separated with a little force during use, so that the plastic bag is clamped to between the rollers. The rotation of the motors 2-1 on two sides drives the gears to rotate, and then drives the rollers to rotate to pull down the plastic bag.

## Claims

1. A plastic bag pull-down device for a smart packaging toilet, comprising two roller driving assemblies (2) arranged oppositely for pulling a plastic bag down, wherein
each roller driving assembly (2) comprises a motor (2-1), a motor shaft (2-2), a housing (2-3), a first gear (2-4), a first roller (2-6), and a second roller (2-7), wherein the motor (2-1) is connected to the first gear (2-4) through the motor shaft (2-2), the first gear (2-4) is connected to the first roller (2-6), and **characterized in that**
the motor (2-1) is mounted on an outer surface of the housing (3-3) and
each roller driving assembly (2) further comprises a second gear (2-5), the first gear (2-4) meshes with the second gear (2-5), and the second gear (2-5) is rotatably mounted on a transmission shaft (2-8) inside the housing (2-3) and is connected to the second roller (2-7),
wherein each roller driving assembly (2) further comprises a torsion spring (2-9) and a limiting platform (2-10), the torsion spring (2-9) is sleeved on a fixed column in the housing (2-3), one end of the torsion spring (2-9) is limited to an inner wall of the housing (2-3), the other end of the torsion spring (2-9) abuts against the limiting platform (2-10), and a circular hole in an edge of the limiting platform (2-10) is connected to the transmission shaft (2-8), wherein a positioning hole of the transmission shaft (2-8) on the housing (2-3) is provided as a slot hole.

2. The plastic bag pull-down device for the smart packaging toilet according to claim 1, **characterized in that** each of the first roller (2-6) and the second roller (2-7) is wrapped with a rubber skin.

3. A smart packaging toilet, comprising a base (1) and a toilet seat (3), **characterized by** further comprising the plastic bag pull-down device for the smart packaging toilet according to claim 1, wherein
the two roller driving assemblies (2) are mounted on two sides of a bottom of the toilet seat (3) respectively.

## Patentansprüche

1. Plastikbeutel-Abziehvorrichtung für eine intelligente Toilette mit Verpackungsfunktion, umfassend zwei gegenüberliegend angeordnete Rollenantriebsanordnungen (2) zum Abziehen eines Plastikbeutels, wobei
jede Rollenantriebsanordnung (2) einen Motor (2-1), eine Motorwelle (2-2), ein Gehäuse (2-3), ein erstes Getrieberad (2-4), eine erste Rolle (2-6) und eine zweite Rolle (2-7) umfasst, wobei der Motor (2-1) über die Motorwelle (2-2) mit dem ersten Getrieberad (2-4) verbunden ist, wobei das erste Getrieberad (2-4) mit der ersten Rolle (2-6) verbunden ist, und **dadurch gekennzeichnet, dass** der Motor (2-1) an einer Außenoberfläche des Gehäuses (3-3) montiert ist und
jede Rollenantriebsanordnung (2) ferner ein zweites Getrieberad (2-5) umfasst, wobei das erste Getrieberad (2-4) mit dem zweiten Getrieberad (2-5) kämmt und das zweite Getrieberad (2-5) drehbar auf einer Übertragungswelle (2-8) im Inneren des Gehäuses (2-3) montiert und mit der zweiten Rolle (2-7) verbunden ist,
wobei jede Rollenantriebsanordnung (2) ferner eine Torsionsfeder (2-9) und eine Begrenzungsplattform (2-10) umfasst, wobei die Torsionsfeder (2-9) auf eine feste Säule im Gehäuse (2-3) aufgesetzt ist, wobei ein Ende der Torsionsfeder (2-9) an einer Innenwand des Gehäuses (2-3) begrenzt ist und das andere Ende der Torsionsfeder (2-9) an der Begrenzungsplattform (2-10) anliegt, wobei ein kreisförmiges Loch in einem Rand der Begrenzungsplattform (2-10) mit der Übertragungswelle (2-8) verbunden ist, wobei ein Positionierungsloch der Übertragungswelle (2-8) am Gehäuse (2-3) als Langloch vorgesehen ist.

2. Plastikbeutel-Abziehvorrichtung für die intelligente Toilette mit Verpackungsfunktion nach Anspruch 1, **dadurch gekennzeichnet, dass** die erste Rolle (2-6) und die zweite Rolle (2-7) jeweils mit einer Gummihaut umwickelt sind.

3. Intelligente Toilette mit Verpackungsfunktion, umfassend eine Basis (1) und einen Toilettensitz (3), **dadurch gekennzeichnet, dass** sie ferner eine Plastikbeutel-Abziehvorrichtung für die intelligente Toilette mit Verpackungsfunktion nach Anspruch 1 umfasst, wobei
zwei Rollenantriebsanordnungen (2) jeweils an zwei Seiten eines Bodens des Toilettensitzes (3) montiert sind.

## Revendications

1. Dispositif d'extraction de sac en plastique pour une toilette à emballage intelligent, comprenant deux ensembles d'entraînement à rouleaux (2) disposés à l'opposé l'un de l'autre pour tirer un sac en plastique vers le bas, dans lequel,
chaque ensemble d'entraînement à rouleaux (2) comprend un moteur (2-1), un arbre de moteur (2-2), un boîtier (2-3), un premier engrenage (2-4), un premier rouleau (2-6) et un second rouleau (2-7), dans lequel le moteur (2-1) est relié au premier engrenage (2-4) par l'intermédiaire de l'arbre de moteur (2-2), le premier engrenage (2-4) est relié au premier rouleau (2-6), et **caractérisé en ce que**
le moteur (2-1) est monté sur une surface extérieure du boîtier (3-3) et
chaque ensemble d'entraînement à rouleaux (2) comprend en outre un second engrenage (2-5), le premier engrenage (2-4) s'enclenche avec le second engrenage (2-5), et le second engrenage (2-5) est monté de manière rotative sur un arbre de transmission (2-8) à l'intérieur du boîtier (2-3) et est relié au second rouleau (2-7),
dans lequel chaque ensemble d'entraînement à rouleaux (2) comprend en outre un ressort de torsion (2-9) et une plate-forme de limitation (2-10), le ressort de torsion (2-9) est manchonné sur une colonne fixe dans le boîtier (2-3), une extrémité du ressort de torsion (2-9) est limitée à une paroi interne du boîtier (2-3), l'autre extrémité du ressort de torsion (2-9) s'appuie contre la plate-forme de limitation (2-10), et un trou circulaire dans un bord de la plate-forme de limitation (2-10) est relié à l'arbre de transmission (2-8), dans lequel un trou de positionnement de l'arbre de transmission (2-8) sur le boîtier (2-3) est prévu comme trou de fente.

2. Dispositif d'extraction de sac en plastique pour la toilette à emballage intelligent selon la revendication 1, **caractérisé en ce que** chacun du premier rouleau (2-6) et du second rouleau (2-7) est enveloppé d'une peau en caoutchouc.

3. Toilette à emballage intelligent, comprenant une base (1) et un abattant de toilette (3), **caractérisée en ce qu'**elle comprend en outre le dispositif d'extraction de sac en plastique pour la toilette à emballage intelligent selon la revendication 1, dans lequel les deux ensembles d'entraînement à rouleaux (2) sont montés respectivement sur deux côtés d'une partie inférieure de l'abattant de toilette (3).
